# EUROPÄISCHE PATENTSCHRIFT

(11) **EP 1 390 222 B1**
(45) Veröffentlichungstag und Bekanntmachung des Hinweises auf die Patenterteilung: **08.02.2006**
(21) Anmeldenummer: 02750986.8
(22) Anmeldetag: 29.05.2002
(51) Int. Cl.: B60J 5/04

(54) **TÜRRAHMEN FÜR EINE FAHRZEUGTÜR**
DOOR-FRAME FOR A VEHICLE DOOR
CADRE POUR UNE PORTIERE DE VEHICULE

(30) Priorität: 29.05.2001 DE 10126250
(43) Veröffentlichungstag der Anmeldung: 25.02.2004
(73) Patentinhaber: Faurecia Innenraum Systeme GmbH, 76767 Hagenbach (DE)
(72) Erfinder: KÖLLNER, Harald, 63674 Altenstadt (DE); ECKHARDT, Bernhard, 35578 Wetzlar (DE); SCHLIWA, Enrico, 99817 Eisenach (DE); SIELHORST, Bernhard, 36205 Sontra (DE)
(74) Vertreter: Pfenning, Meinig & Partner GbR
(86) Internationale Anmeldenummer: PCT/EP2002/005902
(87) Internationale Veröffentlichungsnummer: WO 2002/096690

(56) Entgegenhaltungen:
- EP-A- 0 776 778
- DE-A- 4 008 111
- DE-A- 19 713 317
- DE-A- 19 727 010
- DE-A- 19 920 841
- GB-A- 2 316 431

## Beschreibung

Die Erfindung betrifft einen Türrahmen für eine Fahrzeugtür gemäß dem Oberbegriff des Patentanspruches 1.

Bekannt sind Fahrzeugtüren, insbesondere für Kraftfahrzeuge, die aus einem Türrahmen mit einer Aussenverkleidung und einer Innenverkleidung aufgebaut sind. Der Türrahmen bringt die für eine Fahrzeugtür notwendige Stabilität und trägt neben den Verkleidungen die Funktionselemete wie Fensterheber für die bewegliche Fensterscheibe sowie die erfoderlichen Führungsschienen, Türschloss mit Betätigungsgriff, Türschamiere und gegebenenfalls die Befestigungsplatte für einen Aussenspiegel. Der Türrahmen wird üblicherweise aus miteinander verschweissten Strangpressprofilen gebildet, die vor ihrer Verbindung in die erforderliche Form gebogen wurden. Zur Versteifung des Rahmens und für die Aufnahme der Funktionselemente müssen zusätzliche Profile, Bänder bzw. Platten angeschweisst werden. Der heute in Fahrzeugtüren übliche Seitenaufprallträger wird ebenfalls in den Rahmen eingeschweisst. Ein Türrahmen nach dem Stand der Technik besteht so aus vielen Einzelteilen, die in zeitaufwendiger und somit auch kostenintensiver Weise zusammengefügt und verschweisst werden. Die Rahmenteile bestehen hierbei aus dem Fachmann bekannten Aluminium- bzw. Magnesiumlegierungen.

Aufgabe der Erfindung ist es daher, einen Türrahmen für eine Fahrzeugtür anzugeben, dessen Anzahl an Einzelteilen reduziert ist und somit auch der Aufwand zum Verschweissen der Einzelteile und die Herstellkosten gesenkt sind und der darüber hinaus eine hohe Funktionsintegration zulässt.

Die Aufgabe wird durch den kennzeichnenden Teil des Patentanspruches 1 gelöst; die Unteransprüche geben vorteilhafte Weiterbildungen der Erfindung an.

Der erfindungsgemässe Türrahmen wird aus zwei Seitenteilen und midestens zwei, die beiden Seitenteile verbindende Holme gebildet. Der heute in Fahrzeugtüren weitestgehend übliche Seitenaufprallträger kann als dritter Holm an entsprechender Stelle eingeführt werden, ist aber für die Erfindung an sich nicht notwendig. Ebenfalls nicht zwingen notwendig ist ein den Fensterbereich nach oben abschliessendes oberes Fensterrahmenteil, welches die oberen Enden der Fensterführungsschienen miteinander verbindet.

Die Seitenteile werden als Druckgussteile ausgeführt. Als Material für die Seitenteile bieten sich dem Fachmann bekannte Leichtmetalllegierungen wie z.B. aus Aluminium oder Magnesium an. Die Druckgussteile bieten die Möglichkeit, geforderte äussere und innere Konturen entsprechend des Fahrzeugdesigns leicht zu realisieren. Die erforderlichen Befestigungen bzw. Aufnahmen für die Funktionselemente und die Verkleidungen werden konstruktiv eingebracht. Das zusätzliche Anbringen von separat herzustellenden Platten und Bändern oder ähnlichem als Befestigungsmöglichkeit für die Funktionsteile entfällt.

Für die verbindenden Holme werden bevorzugt Strangpressprofile verwendet, deren Material zu dem Material der Seitenteile passend gewählt wird.

Gegenüber dem Stand der Technik wird je nach Ausführung mit oder ohne oberem Fensterrahmenteil die Anzahl der Rahmeneinzelteile auf 5 bzw.6, wobei das nicht notwendige Seitenaufprallprofil mitgezählt wird, reduziert.

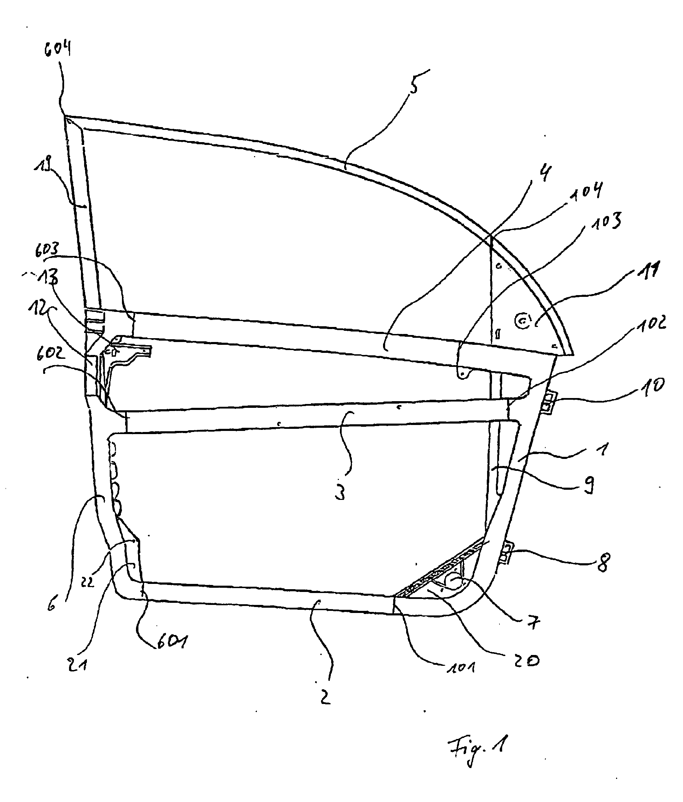

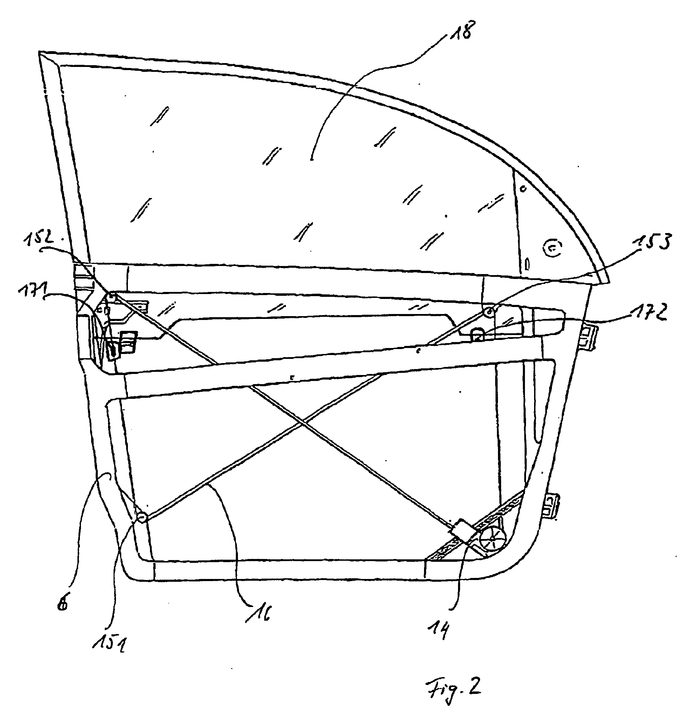

Die Erfindung sei nun an Hand der Figuren 1 und 2 näher erläutert.
- Fig. 1: zeigt einen erfindungsgemäßen Türrahmen ohne Funktionsteile
- Fig. 2: zeigt den Türrahmen wie in Fig. 1 jedoch mit Fenster in geschlossenem Zustand und Fensterhebermechanismus

In Figur 1 ist mit 1 das rechte Seitenteil des Türrahmens, mit den Bezugszeichen 2 der untere Holm, 3 das Seitenaufprallprofil, 4 der obere Holm oder auch Brüstung genannt, mit 5 das Fensterrahmenteil, das bei Türen mit sogenannten rahmenlosen Fenstern fehlen kann, und mit 6 das linke Seitenteil bezeichnet. Die Teile mit den Bezugszeichen 2 bis 5 werden auch in ihrer Gesamtheit als Querteile bezeichnet.

Das Seitenteil 1 ist mit den Querteilen über die Verbindungsstellen 101, 102, 103 und 104 verbunden, das Seitenteil 6 über die entsprechenden Verbindungsstellen 601 bis 604. Als vorteilhaft hat es sich erwiesen, die Teile an den Verbindungsstellen 101 bis 104, bzw. 601 bis 604 so zu gestalten, dass Querteile und Seitenteile ineinander gesteckt und anschliessend verschweisst werden. Dies vereinfacht die Montage des Türrahmens. Die Teile müssen zum Verschweissen nicht gesondert fixiert werden. Im allgemeinen genügt eine Lehre zum Einstellen der geforderten Türrahmenmasse, in der danach auch der Schweissvorgang stattfinden kann.

In das Seitenteil 1 sind verschiedene Funktionsteile integriert. Mit Bezugszeichen 9 ist die rechte Fensterführungschiene bezeichnet. Die linke Fensterführungsschiene befindet sich in Seitenteil 6 und ist mit Bezugszeichen 19 bezeichnet. Diese beiden Führungen sind einstückig in das entsprechende Seitenteil integriert. Hierin kann das bewegliche Fenster, Bezugszeichen 18 in Fig. 2, in geschlossenem Zustand gezeigt, zwischen Offenstellung, wobei sich der dem Fensterrahmenteil 5 zugekehrte obere Rand der Fensterscheibe 18 in Höhe der Brüstung 4 oder nur wenig darüber hinausragend befindet (nicht gezeichnet), und geschlossener Stellung, wie sie in Fig 2 gezeigt ist, bewegt werden.

Mit den Bezugszeichen 8 und 10 sind zwei Türschanierteile des Türrahmens bezeichnet, die einstückig in das Seitenteil 1 integriert sind. Die entsprechenden Gegenstücke, in die die Teile 8 und 10 in dem Fachmann in bekannter Weise bewegbar eingeführt werden, befinden sich in den Türöffnungen der Karosserie des Fahrzeuges (nicht gezeichnet) und komplettieren die Türscharniere.

Mit Bezugszeichen 11 ist die Halteplatte für die Montage des Aussenspiegels bezeichnet. Dieses Teil 11 ist ebenfalls integraler Bestandteil des Seitenteiles 1.

Im Seitenteil 6 ist mit Bezugszeichen 12 eine Vertiefung bezeichnet, in die Das Türschloss eingeführt und befestigt werden kann. Bezugszeichen 13 bezeichnet die einstückig in das Seitenteil 6 integrierte Halterung für den Türgriff. Türschloss und Türgriff sind beide nicht näher ausgeführt, da sie nicht Gegenstand dieser Erfindung sind.

In den unteren Bereichen der Seitenteile 1 und 6 sind mit Bezugszeichen 20 und 21 Aussteifungselemente bezeichnet, die den Türrahmen gegen Einwirkung von Schubkräften versteifen. Auch diese Teile sind einstückig in die Seitenteile integriert.

In dem Aussteifungselement 20 ist, mit 7 bezeichnet, die Aufnahme für einen Antriebsmotor 14 für die bewegliche Fensterscheibe 18 enthalten. Im Aussteifungselement 21 befindet sich die Aufnahme für eine Umlenkrolle 151 für den Fensterhebermechanismus.

Der Fensterhebermechanismus ist in Fig. 2 dargestellt. Es handelt sich um einen an sich bekannten Seilfensterheber mit umlaufendem Seil 16 mit den Umlenkrollen 151, 152 und 153. Die Umlenkrollen 152 und 153 sind an Ohren 22 und 23 drehbar befestigt. Diese Ohren 22 und 23 sind wiedrum einstückig in die Seitenteile 1 und 6 integriert. An diesem Seil sind Halterungen 171 und 172 befestigt, in die die Fensterscheibe 18 eingesteckt ist. Mit Hilfe des Antriebes 14 kann das Seil im Uhrzeigersinn bzw, gegen Uhrzeigersinn bewegt werden. Hierdurch wird die Fensterscheibe 18 in den Fensterführungen 9 und 19 zwischen Offenstellung und Geschlossenstellung bewegt Figur 2 gibt die Geschlossenstellung der Fensterscheibe 18 wieder.

Die Seitenteile 1 und 6 sind aus einer Leichtmetalllegierung als Druckgussformteile hergestellt. Als Leichtmetalllegierung hat sich als geeignet die Legierung Magsimal-59 (AlMg5Si2Mn) der Fa. Aluminium Rheinfelden GmbH erwiesen. Andere Legierungen aus der Leichtmetallgruppe, wie z.B. auf Magnesiumbasis, sind ebenfalls denkbar.

Die Querteile 2 bis 5 können als Strangpressprofile aus Material, das sich in Bezug auf elektrochemische Verträglichkeit (Korrosion) mit der Legierung der Seitenteile 1 und 6 verträgt, gebildet werden. Bei entsprechender Steifigkeit und Zähigkeit können dies auch Kunststoffe sein.

Die Konstruktion der Seitenteile 1 und 6 als Druckgussteile erlaubt die hohe Integration von Funktionselementen wie oben beschrieben. Hierdurch wird die geringe Anzahl an einzelnen Bauteilen ermöglicht, was zu den Vorteilen gegenüber der Konstruktion nach dem Stand der Technik führt.

## Patentansprüche

1. Türrahmen für eine Fahrzeugtür, der aus zwei Seitenteilen (1 und 6) und mindestens zwei, die Seitenteile verbindenden Holmen (2, 3, 4, 5) besteht, wobei die Seitenteile (1 und 6) aus Druckgussformteilen bestehen, **dadurch gekennzeichnet, daß** in die Seitenteile (1 und 6) Aufnahmen für Umlenkrollen (151, 152, 153) und die Aufnahme (7) für einen Fensterheberantrieb (14) integriert sind.

2. Türrahmen nach Anspruch 1, **dadurch gekennzeichnet, daß** in die Seitenteile (2 und 6) die Führungsschienen (9 und 19) für ein bewegliches Fenster (18) integriert sind.

3. Türrahmen nach Anspruch 1, **dadurch gekennzeichnet, daß** in ein Seitenteil (6) die Aufnahme (12) für ein Türschloß integriert ist.

4. Türrahmen nach Anspruch 1, **dadurch gekennzeichnet, daß** in ein Seitenteil (6) die Halterung (13) für den Türgriff integriert ist.

5. Türrahmen nach Anspruch 1, **dadurch gekennzeichnet, daß** in ein Seitenteil (1) Türscharnierteile (8 und 10) integriert sind.

6. Türrahmen nach Anspruch 1, **dadurch gekennzeichnet, daß** in ein Seitenteil (1) die Befestigungsplatte (11) für den Rückspiegel integriert ist.

7. Türrahmen nach Anspruch 1, **dadurch gekennzeichnet, daß** die Seitenteile (1 und 6) als Druckgussformteile aus einer Leichtmetalllegierung bestehen.

8. Türrahmen nach Anspruch 7, **dadurch gekennzeichnet, daß** es sich bei der Leichtmetalllegierung um eine Aluminiumlegierung handelt.

9. Türrahmen nach Anspruch 7, **dadurch gekennzeichnet, daß** es sich bei der Leichtmetalllegierung um eine Magnesiumlegierung handelt.

10. Türrahmen nach Anspruch 1 **dadurch gekennzeichnet, daß** die Holme (2, 3, 4 und 5) aus Strangpressprofilen bestehen.

11. Türrahmen nach Anspruch 10, **dadurch gekennzeichnet, daß** die Holme (2, 3, 4 und 5) aus einem Material bestehen, das mit dem Material der Seitenteile (1 bzw. 6) im Hinblick auf elektrochemische Verträglichkeit unbedenklich ist.

## Claims

1. Door frame for a vehicle door, consisting of two side parts (1 and 6) and at least two bars (2, 3, 4 and 5) connecting the side parts, whereby the side parts (1 and 6) consist of pressure injected pre-casts, **characterised in that** take-ups for diverting rollers (151, 152, 153) and the take-up (7) for a window lifting mechanism (14) are integrated into the side parts (1 and 6).

2. Door frame according to Claim 1, **characterised in that** the guide rails (9 and 19) for a moveable window (18) are integrated into the side parts (2 and 6).

3. Door frame according to Claim 1, **characterised in that** the take-up (12) for a door lock is integrated into one side part (6).

4. Door frame according to Claim 1, **characterised in that** the Holder (13) for the door handle is integrated into one side part (6).

5. Door frame according to Claim 1, **characterised in that** door hinge sections (8 and 10) are integrated into one side part (1).

6. Door frame according to Claim 1, **characterised in that** the fitting plate (11) for the rear view mirror is integrated into one side part (1).

7. Door frame according to Claim 1, **characterised in that** the side parts (1 and 6) consist of light metal alloy pressure injected pre-casts.

8. Door frame according to Claim 7, **characterised in that** the light metal alloy is an aluminium alloy.

9. Door frame according to Claim 7, **characterised in that** the light metal alloy is a magnesium alloy.

10. Door frame according to Claim 1, **characterised in that** the bars (2, 3, 4 and 5) consist of injection moulded profiles.

11. Door frame according to Claim 10, **characterised in that** the bars (2, 3, 4 and 5) consist of a material that is electrochemically compatible with the material of the side parts (1, i.e. 6).

## Revendications

1. Cadre de porte pour une porte de véhicule, qui se compose de deux parties latérales (1 et 6) et d'au moins deux montants (2, 3, 4, 5) reliant les parties latérales, les parties latérales (1 et 6) étant constituées de pièces moulées sous-pression, **caractérisé en ce que** des logements pour des galets inverseurs (151, 152, 153) et le logement (7) pour un entraînement de lève-vitre (14) sont intégrés dans les parties latérales (1 et 6).

2. Cadre de porte selon la revendication 1, **caractérisé en ce que** les rails de guidage (9 et 19) pour une fenêtre (18) mobile sont intégrés dans les parties latérales (2 et 6).

3. Cadre de porte selon la revendication 1, **caractérisé en ce que** le logement (12) pour une serrure de porte est intégré dans une partie latérale (6).

4. Cadre de porte selon la revendication 1, **caractérisé en ce que** le support (13) pour la poignée de porte est intégré dans une partie latérale (6).

5. Cadre de porte selon la revendication 1, **caractérisé en ce que** des parties de charnière de porte (8 et 10) sont intégrées dans une partie latérale (1).

6. Cadre de porte selon la revendication 1, **caractérisé en ce que** la plaque de fixation (11) pour le rétroviseur est intégrée dans une partie latérale (1).

7. Cadre de porte selon la revendication 1, **caractérisé en ce que** les parties latérales (1 et 6) sont constituées de pièces moulées sous-pression à base d'un alliage de métal léger.

8. Cadre de porte selon la revendication 7, **caractérisé en ce qu'**il s'agit d'un alliage d'aluminium en ce qui concerne l'alliage de métal léger.

9. Cadre de porte selon la revendication 7, **caractérisé en ce qu'**il s'agit d'un alliage de magnésium en ce qui concerne l'alliage de métal léger.

10. Cadre de porte selon la revendication 1, **caractérisé en ce que** les montants (2, 3, 4 et 5) sont constitués de profilés extrudés.

11. Cadre de porte selon la revendication 10, **caractérisé en ce que** les montants (2, 3, 4 et 5) sont à base d'un matériau qui ne pose pas de problème au niveau de la compatibilité électrochimique avec le matériau des parties latérales (1 et 6).
